# EUROPEAN PATENT APPLICATION

(11) **EP 4 644 721 A1**
(43) Date of publication of application: **05.11.2025**
(21) Application number: 24173220.5
(22) Date of filing: 30.04.2024
(51) Int. Cl.: F16D 63/00, E05B 41/00, F16D 65/14, F16D 66/00, F03D 7/02, F16D 121/20

(54) **ROTOR LOCK**

(71) Applicant: Siemens Gamesa Renewable Energy A/S, 7330 Brande (DK)
(72) Inventor: Mohammed, Masrur, 560094 Bangalore (IN); D, Venkatesh, 627 852 Oormelalagian, Tenkasi (IN); Shariff, Shoib Ahmed, 570004 Mysore (IN); K S, Sharath, 577201 Shimoga (IN)
(74) Representative: SGRE-Association

(57) **Abstract**

The invention describes a rotor lock (10) of a rotor brake assembly (1), which rotor lock (10) comprises a bolt (10B) arranged in a stationary sleeve (105); an actuator (17) adapted to extend and retract the bolt (10B) in an axial direction; a position indicator assembly (101, 102) comprising a position indicator (101) and a sliding component (102), arranged such that an axial motion of the bolt (10B) results in an identical axial motion of the position indicator assembly (101, 102); and a position sensor (S1, S2) mounted to the sleeve (105) and arranged to detect the position indicator (101) when the bolt (10B) is fully extended; characterized in that the bolt (10B) is free to turn relative to the sliding component (102) of the position indicator assembly (101, 102). The invention further describes a brake assembly (1) for a rotor (2R) comprising at least one such rotor lock (10).

## Description

### Background

A large electrical machine such as a wind turbine drivetrain is generally equipped with some means of arresting rotation of one or more rotary parts of the drivetrain. This can be necessary at various times, for example during rotor blade installation, during high wind conditions, during a maintenance or service procedure, etc. To this end, a brake assembly can be provided at the non-drive end of the generator so that the generator rotor can be brought to a halt and then prevented from turning.

Generally, such a brake assembly comprises a support plate mounted at the non-drive end of the generator, calipers or brake pads placed to clamp about a brake disc of the generator rotor, and several rotor locks which can be actuated as necessary to halt the generator rotor. A rotor lock can be actuated as appropriate to move a bolt into a corresponding hole provided for this purpose in the brake disc. It is important for a controller to know whether or not the rotor locks are correctly engaged, and to know whether or not the rotor locks are correctly disengaged. To this end, it is known to provide a rotor lock with a position monitor by arranging proximity sensors at suitable positions along a stationary housing of the rotor lock, and attaching a position indicator or "target" (which can sensed or detected by a proximity sensor) to the rotor lock bolt. When the bolt moves axially to its "engaged" position, the target will be sensed by the corresponding proximity sensor, which issues a "rotor lock engaged" report to the controller. Similarly, when the bolt returns to its "disengaged" position, the target will be sensed by the corresponding proximity sensor, which issues a "rotor lock disengaged" report to the controller.

However, in the known approach, the target is attached to the rotor lock bolt by providing a threaded bore extending some distance radially into the bolt and using a threaded fastener to attach the target to the bolt. This configuration is vulnerable to damage, since an unintended rotational action of the rotor lock bolt can stress the fastener, and may bend it out of shape, thereby hindering axial movement of the bolt in the sleeve. The forces acting on the bolt may be so large that the resulting "turning" action on the bolt may shear the fastener entirely, thereby detaching the target from the bolt and rendering the position sensor useless. A wind turbine with such a faulty rotor lock must be shut down until the rotor lock can be replaced, thereby entailing significant costs and loss of revenue.

It is therefore an object of the invention to overcome the problems outlined above.

This object is achieved by the claimed rotor lock and by the claimed brake assembly.

### Description

The claimed rotor lock is particularly suitable for use in a rotor brake assembly that halts a large rotor by applying friction to a brake disc of the rotor until the rotor is brought to a halt. An example of such a large rotor can be the outer rotor of a direct-drive wind turbine generator.

According to the invention, the rotor lock comprises a double-action bolt arranged in a stationary sleeve and an actuator adapted to extend and retract the bolt in an axial direction. The rotor lock further comprises a bolt position monitor with an axially displaceable position indicator or "target", and a stationary position sensor mounted to the sleeve. The position sensor is arranged to detect the target when the bolt is fully extended. The position sensor's target is held in an assembly that travels along with the bolt, i.e. the target is arranged such that an axial motion of the bolt results in an identical axial motion of the target assembly. The inventive rotor lock is characterized in that the bolt is free to turn about its longitudinal axis relative to the position indicator assembly. In other words, in the context of a radial path about the bolt, the target assembly and the bolt are free to move relative to each other. This is achieved by realizing the target assembly and bolt as separate components in the rotor lock, i.e. the target assembly is not physically connected to the bolt.

An advantage of the inventive rotor lock is that the position indicator assembly is unaffected by a rotational motion of the bolt. This means that, in a situation in which the brake disc of the halted rotor exerts a shear force on the extended rotor lock bolt, causing it to turn slightly about its long axis, the position indicator is unaffected. As a result, the position indicator will not be stressed or damaged by the turning motion of the rotor lock bolt.

According to the invention, the brake assembly comprises a support plate arranged adjacent to a brake disc of a rotor; a number of calipers mounted on the support plate and adapted to apply friction to the brake disc in order to halt the rotor. The inventive brake assembly also comprises at least one instance of the inventive rotor lock mounted on the support plate and arranged to engage with the brake disc to prevent rotation of the halted rotor. The brake disc can be assumed to have a suitable configuration of holes placed to receive the bolt(s) of a rotor lock when extended to arrest the rotor.

Particularly advantageous embodiments and features of the invention are given by the dependent claims, as revealed in the following description. Features of different claim categories may be combined as appropriate to give further embodiments not described herein.

In the following, it may be assumed that the rotor lock is intended for use in a brake assembly of a type used in a wind turbine. In a direct-drive wind turbine, an embodiment of the inventive brake assembly may be arranged to halt the generator rotor. To this end, the generator rotor may be equipped with a brake disc (e.g. at the non-drive end or downwind end of the generator), and the brake assembly can be actuated (e.g. by the wind turbine controller) to halt the rotor whenever necessary and to lock the rotor, preventing unintended rotation for the reasons given in the introduction.

Particularly in the case of a large rotor, such a brake assembly can comprise several rotor locks spaced (usually equidistantly) about the support plate, so that any turning action on the rotor can be counteracted more effectively. Generally, a brake assembly will comprise several identical rotor locks that are actuated simultaneously. If any one rotor lock becomes defective, the wind turbine will be shut down until the damaged component is replaced. The rotor locks of such a brake assembly can be actuated using a hydraulic actuator, an electromechanical actuator, etc., as will be known to the skilled person.

The terms "position indicator" and "target" are regarded as synonyms in the context of the invention and can be used interchangeably herein. The rotor lock may be assumed to comprise a position sensor arranged to detect the target when the bolt is fully extended, and another position sensor arranged to detect the target when the bolt is fully retracted. For example, a "front position sensor" detects the target when the bolt is fully extended and sends a "rotor lock engaged" signal to the wind turbine controller (which then knows that the rotor is locked); a "rear position sensor" detects the target when the bolt is fully retracted and sends a "rotor lock disengaged" signal to the wind turbine controller (which can then safely start the wind turbine). A position sensor can be any type of sensor, and is preferably realised as a proximity sensor such as a magnetic proximity sensor, an inductive proximity sensor, a capacitive proximity sensor, etc.

The material from which the target is made depends on the choice of position sensor. In a particularly preferred embodiment of the invention, any position sensor is an inductive proximity sensor, and the target is made of a suitable metal.

The inventive rotor lock deploys a position indicator that is not physically attached to the bolt, in contrast to the prior art approach in which a position indicator is attached to the bolt by providing a threaded bore extending some distance radially into the bolt and using a threaded fastener to attach the position indicator to the bolt. As explained above, the position indicator is held in a close-fitting axial channel or groove so that, when the bolt is extended, a proximity sensor can detect the position indicator and report the "engaged" state. However, as explained above, this configuration is vulnerable to damage, since an unintended rotational action of the bolt can stress the fastener, and may bend it out of shape, thereby hindering axial movement of the bolt in the sleeve; or causing it to break, thereby detaching the position indicator from the bolt and rendering the position sensor useless.

In a particularly preferred embodiment of the invention, the rotor lock comprises a complete or partial race formed about the circumference of the bolt, at the inner end of the bolt. For example, if the rotor lock is arranged to extend the bolt in the upwind direction, the race is formed about the bolt near its downwind end. This race can be visualized as a shallow channel or groove extending a short distance about the bolt, for example to facilitate a partial rotation of the bolt through at least 3° in either direction.

The brake assembly of a wind turbine can also include a manual locking pin which can be moved by a service technician to engage with a corresponding feature of an already extended rotor lock. Such a manual locking pin is an additional safety measure of the brake assembly, and serves to prevent the rotor lock from unintentional retraction due to hydraulic back pressure. In a particularly preferred embodiment of the invention, therefore, the rotor lock comprises a race formed about the entire circumference of the bolt, and the manual locking pin is shaped to fit into this channel when the rotor lock is in its "engaged" position.

In a particularly preferred embodiment of the invention, the target assembly comprises a slider dimensioned to fit in the race, and the target is secured to the slider. This can be done in any suitable manner. For example, the slider and the target may be provided with matching threaded portions so that the target can be threaded onto the slider. In another possible realisation, both parts can be formed to have matching through-holes so that they may be joined by a fastener such as a cotter pin, a threaded bolt, etc. Because the race or channel formed about the front end of the bolt serves to contain the slider, it be referred to in the following as the "slider channel" or "slider race".

The slider can be made of any suitable material, for example a polymer such as a polycarbonate, preferably with a low friction coefficient so that it moves smoothly along the slider channel.

The slider is preferably shaped to fit completely in the slider channel, i.e. the height of the slider does not exceed the depth of the slider channel. Such an embodiment has the advantage that the axial channel of the rotor lock need not be re-designed, and the only modifications to an existing rotor lock are to form the slider channel about the bolt, to provide a matching slider, and to attach the target to the slider. Modifications to the target and position sensor are not required.

The slider channel and the slider can be realized in a number of ways. Preferably, the side walls of the slider make contact with the side walls of the race. In one embodiment, the cross-section of the slider channel is essentially rectangular, i.e. the race and the slider both have vertical side walls. In an alternative embodiment, the annular channel has inwardly sloping side walls for a "dovetail" fit with a correspondingly shaped slider. Equally, the annular channel has inwardly sloping side walls for a "dovetail" fit with a correspondingly shaped slider; or a U-shaped or curved wall to receive a correspondingly rounded slider.

Any suitable adaptations can be made to an existing rotor lock design so that the bolt will "carry" the target as it moves axially back and forth in the sleeve, without actually connecting the target to the bolt. For example, an annular ridge can be provided about the circumference of the bolt, to mate with a correspondingly shaped recess in a target. However, such an embodiment may entail adjustments to the sleeve also. Therefore, in a particularly preferred embodiment of the invention, the rotor lock is manufactured by providing a suitably-shaped slider and mounting a target to the slider, for example using a threaded fastener. The slider and target now effectively act as a single component. In a next step, a corresponding surface feature is formed on the bolt to accommodate the sliding component, for example a race or channel that is slightly longer than the slider. A suitable length for the slider channel can be determined from observations on existing rotor locks in which a slight rotation of the bolt has been observed during operation of a brake assembly. After preparing these parts, the rotor lock is assembled by arranging the target in the axial channel of the stationary sleeve, mounting a position sensor to the sleeve to detect the bolt's "engaged" state (and optionally a further a position sensor to detect the bolt's "disengaged" state), arranging the bolt in the stationary sleeve, and connecting the bolt to its actuator. The target assembly is not physically connected to the bolt, but the "mating action" of the slider and its channel ensure that any axial motion of the bolt in the sleeve will result in an identical axial motion of the target assembly. A rotational motion of the bolt in the sleeve will not have any effect on the target assembly, i.e. the bolt is free to turn slightly about its long axis, without any effect on the target assembly. With this approach, the inventive rotor lock is straightforward to realize and can be provided at advantageously low cost, since no adaptations are necessary to the sleeve, the axial channel, etc.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a simplified schematic of the generator of a direct-drive wind turbine;
Figure 2 shows a view of a brake support plate for the brake assembly of Figure 1;
Figures 3 and 4 illustrate a prior art rotor lock;
Figures 5 - 10 illustrate embodiments of the inventive rotor lock.

In the diagrams, like numbers refer to like objects throughout. Objects in the diagrams are not necessarily drawn to scale.

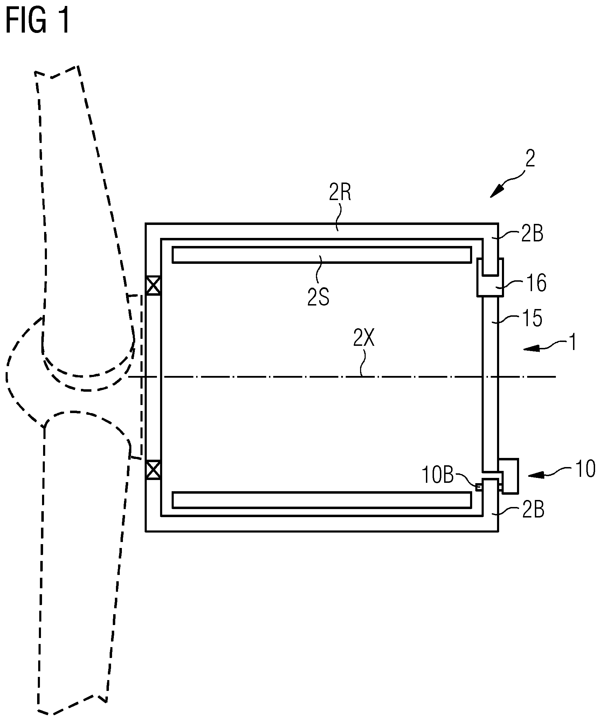

Figure 1 shows a simplified cross-section through the generator 2 of a direct-drive wind turbine. The generator 2 has an outer rotor 2R (which generally supports a field in the form of permanent magnets) and an inner stator 22 (which generally supports an armature in the form of windings) with an airgap in between. The stator 22 can be assumed to be supported by end plates mounted about a stationary shaft. An aerodynamic rotor (rotor blades and hub are indicated by ghost lines) turns the drive end of the generator 2 during operation of the wind turbine. A brake assembly 1 is provided at the non-drive end of the generator 2 so that the outer rotor 2R can be prevented from turning.

The brake assembly 1 comprises a brake support plate 15 mounted at the non-drive end of the shaft, calipers 16 placed to clamp about a brake disc 2B of the outer rotor 2R, and several rotor locks 10 which can be actuated as necessary to halt the outer rotor 2R.

Installation of a wind turbine with such a generator 2 can be done by first lifting a pre-installed assembly comprising at least the generator 2 and the hub onto the top of the wind turbine tower. Each of three rotor blades is then installed. In the case of a large wind turbine with long rotor blades, i.e. a rotor blade length in the order of 80 m, it can be preferred to hoist a rotor blade to hub height while holding the rotor blade horizontally. The hub is turned as necessary to correctly position the corresponding pitch ring (e.g. at "three o'clock" when viewing the installation from in front. The root end of the rotor blade is then moved to meet the pitch ring so that these can be joined.

To facilitate this procedure, it must be possible to turn the hub, i.e. it must be possible to turn the generator rotor 2R. Equally, it must be possible to lock the rotating parts of the drivetrain while a rotor blade is being connected to its pitch ring. The rotor locks 10 are used for this purpose.

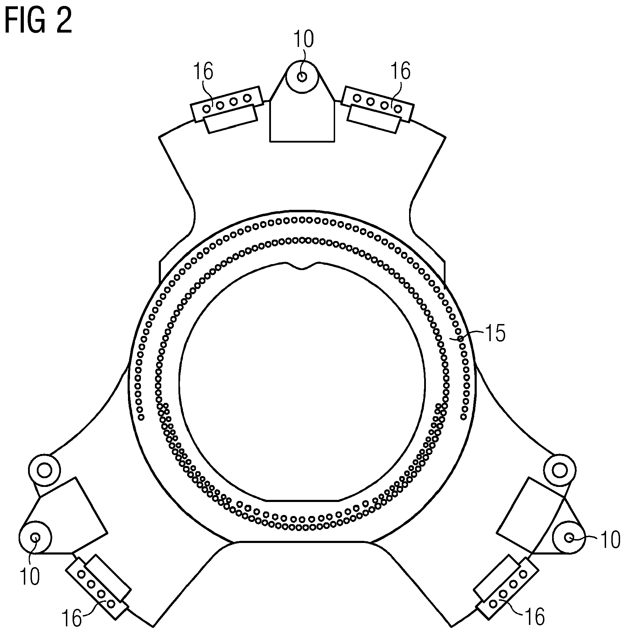

Figure 2 shows a view of the brake support plate 15, looking onto its upwind face. The circular aperture in the centre indicates the opening at the non-drive end of the stationary shaft supporting the stator 2S. The positions of the outer rotor 2R and the brake disc 2B are indicated by ghost lines. Here, the brake assembly 1 deploys three rotor locks 10.

When the outer rotor 2R is allowed to turn, the brake disc 2B moves freely between the calipers 16 or brake pads, i.e. there is no contact between these parts. In order to prevent the outer rotor 2R from turning (during a rotor blade mounting procedure as described above or during any maintenance routine during the service life of the wind turbine), the calipers 16 are actuated to apply friction to the brake disc 2B to halt the rotor 2R as indicated in the upper part of Figure 1, and the rotor locks 10 are then actuated as indicted in the lower part of the diagram, to arrest the rotor 2R. Each rotor lock bolt 10B is extended in a direction parallel to the axis of rotation 2X of the generator rotor 2R.

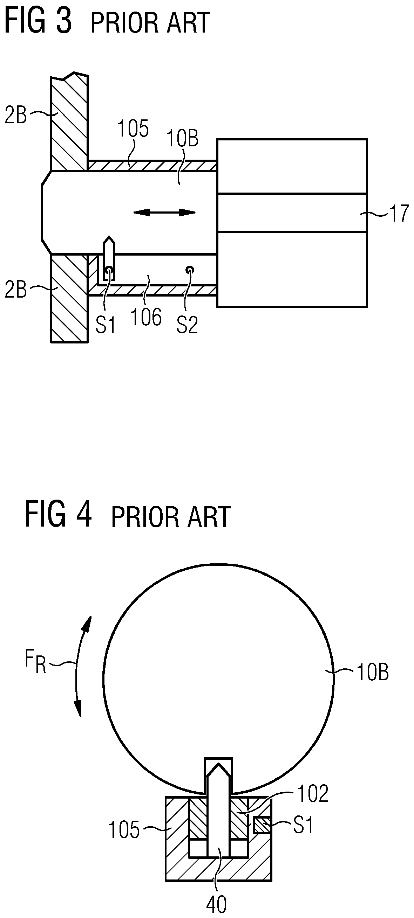

Figures 3 and 4 illustrate a rotor lock 10 as known from the prior art. The rotor lock 10 comprises an actuator 17 (e.g. a hydraulic cylinder) which moves a bolt 10B in the axial direction as indicted to lock/unlock the brake disc 2B. When the bolt 10B is fully extended, the outer rotor 2R is effectively locked. The rotor lock status should be reported to the wind turbine controller to inform relevant personnel whether or not the outer rotor 2R is locked. To this end, the rotor lock 10 includes position sensors S1, S2 and a target 101 mounted to the bolt 10B. Only when the bolt is in its fully extended position, the target 101 is detected by the "front" sensor S1, and the "rotor lock engaged" state is reported. When fully retracted, a "rear" sensor S2 can detect the target 101 and report a "rotor lock disengaged" state.

In this type of rotor lock, the target 101 is secured to the bolt 10B using a threaded fastener 40 as shown in Figure 4, to keep the target in place relative to the bolt 10B when this is moved axially through the sleeve 105. The target 105 is enclosed in an axial channel 106, and any position sensor S1, S2 can be mounted in a side wall of the axial channel as indicated here.

However, this prior art configuration can be vulnerable to damage arising from ovalization or deformation of the brake disc 2B while the brake system is active. This can occur under various conditions, for example when a wind gust causes the aerodynamic rotor to turn against the locked drivetrain. When this happens, very large and unfavourably directed forces can act on one or more of the extended rotor lock bolts 10B. A sufficiently large force F_{R} can bend or even shear the fastener 40 and the junction between bolt 10B and target 101. The damaged target can result in failure to send the "rotor lock disengaged" state to the controller. A maintenance procedure must then be scheduled to investigate the fault and to replace any damaged rotor lock. Such a repair procedure can be very costly and may occur multiple times during the service life of the wind turbine.

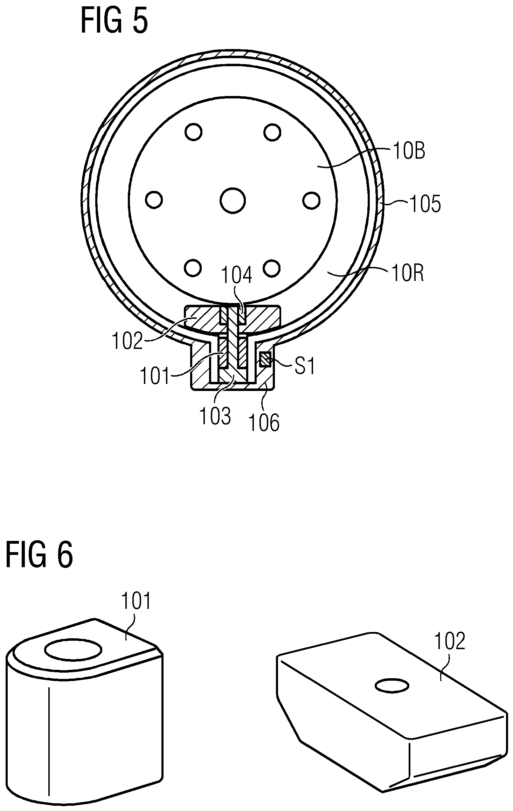

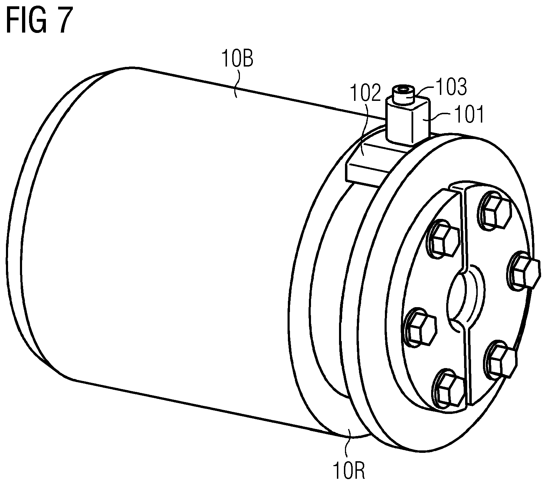

Figures 5 - 10 illustrate several exemplary embodiments of the inventive rotor lock 10. Figure 5 shows a cross-section through the rotor lock, showing a bolt 10B, an target assembly 101, 102 and an axial channel 106 in a configuration similar to that described above. In contrast to the prior art approach illustrated in Figures 3 - 5, the target 101 is not physically connected to the rotor lock bolt 10B. Instead, the target 101 is held at the required axial position along the bolt 10B, but in such a way that the rotor lock bolt 10B is "free to rotate" relative to the target 101, i.e. an unintended rotational movement of the bolt will have no effect on the target 101. To this end, the bolt 10B is provided with a radial channel 10R, and the target assembly includes a slider 102 which is shaped to fit into this radial channel and which is free to slide along this radial channel 10R or race 10R, and a target 101 that is fastened only to the slider 102. Figure 7 shows the bolt 10B with such a slider race 10R, and the slider 102 arranged in the race 10R. For clarity, the slider is shown at the "12 o'clock" position in this view, and the axial channel could also be arranged above the bolt. The slider can in fact be arranged at any point about the circumference of the bolt. The diagram also clearly illustrates that the height of the slider 102 does not exceed the depth of the slider channel 10R.

The target assembly 101, 102 can travel back and forth with the bolt 10B along the axial channel 106, but remains unaffected by any rotational motion of the bolt 10B caused by forces F_{R} acting on the brake disc 2B. Figure 6 shows a possible embodiment of the target assembly 101, 102. Here, the target 101 can be the same type of target used in the prior art as shown in Figures 3 and 4, but instead of mounting this to the bolt 10B using a threaded fastener, it is attached instead to the slider 102, which in turn simply sits in the race 10R. The target 101 can be attached to the slider using a metal screw 103 with a nut 104 that fits in a recess provided in the slider 102, as indicated in Figure 5.

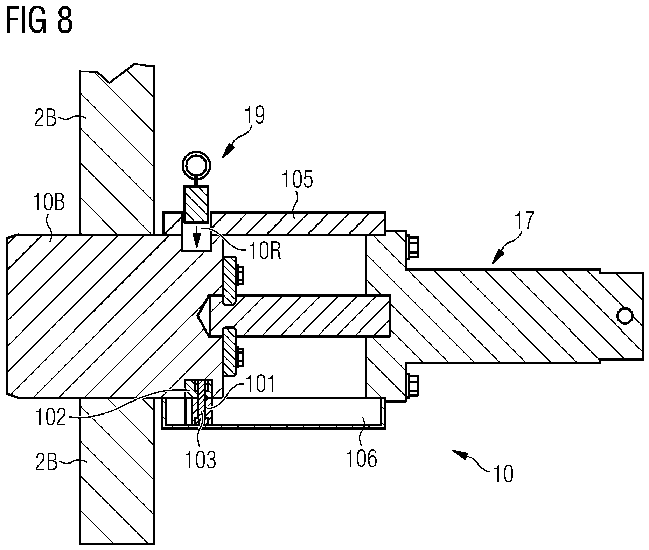

Figure 8 shows the inventive rotor lock 10 in an axial cross-section, in its "engaged" state. The hydraulic actuator 17 has moved the bolt 10B into a corresponding hole in the brake disc 2B. The target 101 is now closest to the front position sensor S1, and the "rotor lock engaged" state is reported. The diagram shows the slider channel 10R and the slider 102, and also shows a manual locking pin 19 that can be fitted into the channel 10R by a technician, as an additional safety measure to prevent hydraulic back pressure from retracting the bolt 10B. In the event that unfavourably directed forces act on the rotor lock bolt 10B as explained above, the bolt 10B can turn without any effect on the target assembly 101, 102, since the bolt 10B and its race 10R can effectively "move past" the slider 102, which simply remains in place, since the target 101 is held stationary by the axial channel 106.

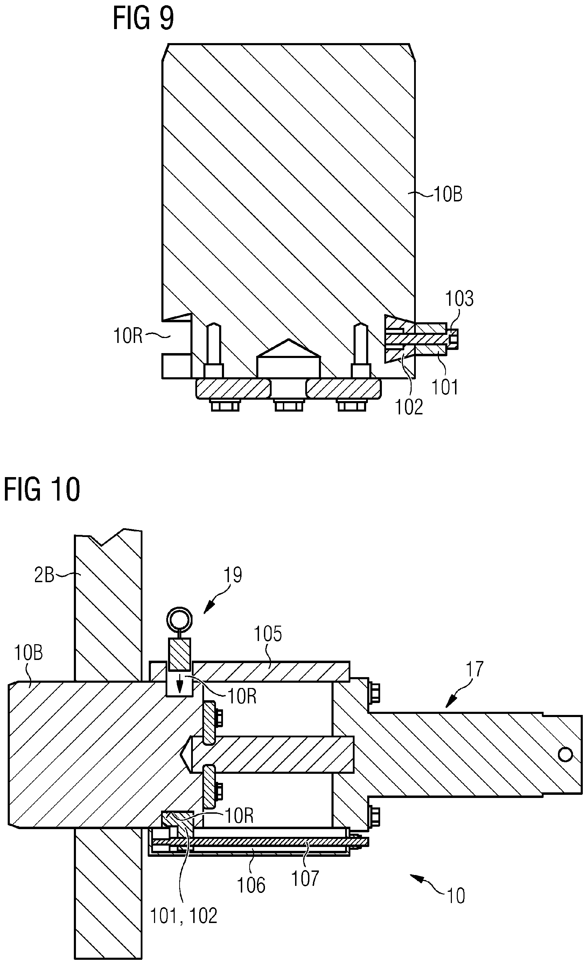

The slider channel 10R can have vertical side walls as shown in the embodiment of Figure 7. Alternatively, in a "dovetail" variant as shown of Figure 9, the slider channel 10R can have inwardly sloping side walls to accommodate a corresponding "dovetail" slider 102 with a trapezoidal cross-sectional shape.

In another embodiment as illustrated in Figure 10, the target assembly 101, 102 is realized as a one-piece component, and is held by a guide rod 107 in the axial channel 106. An axial bore through the target assembly allows it to slide along the fixed guide rod 107 as the bolt 10B is extended or retracted. In the rotor lock engaged state as shown here, the bolt 10B can turn relative to the axial channel 106 without any effect on the target 101.

Although the present invention has been disclosed in the form of preferred embodiments and variations thereon, it will be understood that numerous additional modifications and variations could be made thereto without departing from the scope of the invention. For example, instead of the slider and channel shapes described above, any suitable combination of shapes can be used.

For the sake of clarity, it is to be understood that the use of "a" or "an" throughout this application does not exclude a plurality, and "comprising" does not exclude other steps or elements.

## Claims

1. A rotor lock (10) of a rotor brake assembly (1), which rotor lock (10) comprises
- a bolt (10B) arranged in a stationary sleeve (105);
- an actuator (17) adapted to extend and retract the bolt (10B) in an axial direction;
- a position indicator assembly (101, 102) comprising a position indicator (101) and a sliding component (102), arranged such that an axial motion of the bolt (10B) results in an identical axial motion of the position indicator assembly (101, 102); and
a position sensor (S1, S2) mounted to the sleeve (105) and arranged to detect the position indicator (101) when the bolt (10B) is fully extended;
**characterized in that**
the bolt (10B) is free to turn relative to the sliding component (102) of the position indicator assembly (101, 102) .

2. A rotor lock according to the preceding claim, comprising a race (10R) formed about the circumference of the bolt (10B) to receive the sliding component (102).

3. A rotor lock according to any of the preceding claims, adapted to facilitate a partial rotation of the bolt (10B) through at least 3°.

4. A rotor lock according to any of the preceding claims, wherein the sliding component (102) comprises a polymer material.

5. A rotor lock according to the preceding claim, wherein the sliding component (102) and the position indicator (101) are connected by a threaded fastener (103).

6. A rotor lock according to any of the preceding claims, comprising a first position sensor (S1) arranged to detect the position indicator (101) when the bolt (10B) is fully extended, and a second position sensor (S2) arranged to detect the position indicator (101) when the bolt (10B) is fully retracted.

7. A rotor lock according to any of the preceding claims, wherein the race (10R) has vertical side walls.

8. A rotor lock according to any of claims 1 to 6, wherein the race (10R) has inwardly sloping side walls.

9. A brake assembly (1) for a rotor (2R) comprising
- a support plate (15) arranged adjacent to a brake disc (2B) of the rotor (2R);
- a number of calipers (16) mounted on the support plate (15) and arranged to close about the brake disc (2B) to halt the rotor (2R);
- at least one rotor lock (10) according to claims 1 to 8 mounted on the support plate (15) and arranged to engage with the brake disc (2B) to prevent rotation of the halted rotor (2R).

10. A brake assembly according to the preceding claim, comprising a hydraulic actuator (17) arranged to effect an axial displacement of the bolt (10B) of a rotor lock (10).

11. A brake assembly according to claim 9 or claim 10, comprising three rotor locks (10) equidistantly spaced about the support plate (15).

12. A wind turbine comprising a rotor (2R) equipped with a brake disc (2B) and a brake assembly (1) according to any of claims 9 to 11.

13. A wind turbine according to the preceding claim, wherein the rotor(2R) is the generator rotor (2R).

14. A wind turbine according to claim 12 or claim 13, wherein the wind turbine is a direct-drive wind turbine.

15. A method of manufacturing a rotor lock (10) according to any of claims 1 to 8, which method comprises steps of
- providing a sliding component (102);
- mounting a position indicator (101) to the sliding component (102);
- forming a surface feature (10R) on the bolt (10B) to accommodate the sliding component (102); and subsequently
- arranging the position indicator (101) in an axial channel (106) of the stationary sleeve (105), mounting a position sensor (S1, S2) to the axial channel (106), arranging the bolt (10B) in the stationary sleeve (105), and connecting the bolt (10B) to the actuator (17).
